# EUROPÄISCHE PATENTSCHRIFT

(11) **EP 0 394 803 B1**
(45) Veröffentlichungstag und Bekanntmachung des Hinweises auf die Patenterteilung: **14.12.1994**
(21) Anmeldenummer: 90107209.0
(22) Anmeldetag: 14.04.1990
(51) Int. Cl.: C08L 1/10, C08K 5/10

(54) **Biologisch abbaubare Kunststoffmaterialien**
Biodegradable plastic material
Matière plastique biodégradable

(30) Priorität: 28.04.1989 DE 3914022
(43) Veröffentlichungstag der Anmeldung: 31.10.1990
(73) Patentinhaber: BATTELLE MEMORIAL INSTITUTE, Columbus Ohio 43201-2693 (US); AETERNA-LICHTE GMBH & CO. KG, D-20457 Hamburg (DE)
(72) Erfinder: Best, Bernd, D-6082 Mörfelden (DE); Wollmann, Klaus, D-6251 Eschhofen (DE); Ach, Alexander, Dr., D-6000 Frankfurt am Main 70 (DE)
(74) Vertreter: Reichel, Wolfgang, Dipl.-Ing.

(56) Entgegenhaltungen:
- DE-A- 2 128 007
- US-A- 2 423 823
- US-A- 4 731 122
- CHEMICAL ABSTRACTS, Band 85, Nr. 18, 1976, Seite 425, Zusammenfassung Nr.130108g, Columbus, Ohio, US; J.E. POTTS et al.: "The effect of chemicalstructure on the biodegradability of plastics"

## Beschreibung

Die Erfindung betrifft neue, biologisch durch Kompostieren leicht abbaubare Kunststoffmaterialien und ihre Verwendung zur Herstellung von Hüllen/Behältern für Öllichte, Ewiglichtölkerzen, Kompositionsöllichte, anderer Grablichtausführungen, Opferlichten und Folien.

In der heutigen Wegwerfgesellschaft verursacht die Beseitigung von Abfällen erhebliche Probleme.

Insbesondere die Beseitigung von Kunststoffabfällen ist mit großen Schwierigkeiten verbunden, weil einerseits beim Verbrennen derselben durch den relativ hohen Halogengehalt der üblicherweise verwendeten Kunststoffe aggressive Verbrennungsprodukte entstehen, die zu großen Umweltschäden führen und andererseits bei der Lagerung auf Deponien eine Verrottung entweder überhaupt nicht stattfindet oder aber auch giftige Nebenprodukte gebildet werden.

Im Hinblick auf diese Schwierigkeiten ist man bereits seit längerer Zeit bestrebt, biologisch abbaubare Kunststoffmaterialien zu entwickeln, die leicht auf Deponien abgebaut werden, keine umweltbelastenden Spaltprodukte ergeben und deren Beseitigung somit keine Schwierigkeiten bereitet und die andererseits hinsichtlich ihrer technischen Eigenschaften so beschaffen sind, daß sie die an sie gestellten Erwartungen in Bezug auf die Verarbeitung zu Kunststoffgegenständen und hinsichtlich der Eigenschaften der Kunststoffgegenstände voll erfüllen.

Celluloseester, wie beispielsweise Celluloseacetat und Celluloseacetobutyrat haben aufgrund ihrer Wohlfeilheit bereits seit längerem das Interesse der Kunststoffverarbeiter gefunden. Celluloseacetobutyrat hat ca. 20 % Acetatgruppen und 40 % Butyratgruppen.

So beschreiben die US-Patentschriften 4 729 793 und 4 731 122 bereits durchsichtige Kunststoffgegenstände, die aus Celluloseacetat und Celluloseacetobutyrat gefertigt sind und die neben Polyethylenglycol als Weichmacher Tributyl- und Triethylcitrat enthalten. In der US-PS 4 731 122 soll ein nicht toxisches thermoplastisch verarbeitbares Material hergestellt werden, das über längere Zeit ohne Schädigungseffekte zum Einbringen von Arzneien z.B. im menschlichen Gewebe einsetzbar ist. Es werden dort Celluloseacetat und Celluloseacetobutyrat zusammen eingesetzt. Auf 100% dieser Bestandteile kommen ferner 30% Zitronensäureester als Weichmacher und bis zu 10% Polyethylenglykol.

In Bezug auf die biologische Abbaubarkeit ist diesen vorgenannten Schriften nichts zu entnehmen.

Die gilt auch für die US-A-2 423 823, die ausformbare Kunststoffmaterialien aus einem Celluloseester und 1 bis 25 Gew.% eines Polyesters einsetzt, der zur Erzielung guter Materialien ein Molekulargewicht von mindestens 5000 aufweisen soll.

Die DE-A- 212 8007 hat zur Aufgabe, Sargmaterialien herzustellen. Hierbei geht es um die prinzipiell mögliche Verrottbarkeit und es kann ein großer Zeitraum, der bei dieser Anwendung gerade auch nicht zu kurz sein darf, des Abbaus durch Verrottung in Kauf genommen werden. Das beschriebene Material besteht aus geschäumtem Celluloseacetat mit 50 bis 62,5 Gew.% Essigsäuregehalt und aus 0 bis 40 Gew.% des Standardweichmachers Phthalsäureester, der insbesondere auch für Celluloseacetat eingesetzt wird.

In Chemical Abstracts 85:130108g, Bd.85, Nr.18, 1976, Seite 425, Degradability polymer plast Conference 1973, 12 (Union Carbide Corp., Bound Brook, N.Y.) ist ausgesagt, daß aliphatische Polyester für sich genommen im Gegensatz zu Polyethylenen biologisch abbaubar sind.

Somit sind zwar seit über vier Jahrzehnten diverse ausformbare Kunststoffe hergestellt worden, jedoch besteht nach wie vor ein dringender Bedarf an hochwertigen und dabei dennoch in ausreichend kurzen Zeitspannen biologisch abbaubaren Kunststoffmaterialien.

Ausgehend vom genannten Stand der Technik liegt der Erfindung die Aufgabe zugrunde, neue biologisch abbaubare und ausformbare Kunststoffmaterialien auf der Basis von Celluloseestern und Carbonsäureestern zu schaffen, die durchsichtig oder zumindest durchscheinend sind, die einerseits die erforderlichen Eigenschaften für die Herstellung von Kunststoffgegenständen im spritzgußverfahren, Blasformverfahren usw. aufweisen, in Form dieser Gegenstände eine ausreichend lange Lebensdauer besitzen und andererseits jedoch nach dem Gebrauch in einer ausreichend kurzen Zeitspanne biologisch abbaubar sind, ohne daß dabei schädliche Reaktionsprodukte entstehen.

Gelöst wird diese Aufgabe mit einem biologisch abbaubaren, ausformbaren Kunststoffmaterial, das 50 bis 90 Gew.-% Celluloseester in Form von Celluloseacetat und/oder Celluloseacetobutyrat, 5 bis 40 Gew.-% wenigstens eines biologisch abbaubaren Carbonsäureesters aus der Gruppe der Zitronensäure-, Weinsäure- und Bernsteinsäureester als Weichmacher sowie 5 bis 30 Gew.-% wenigstens eines linearen, hydroxylgruppenhaltigen Polyesters mit einem Molekulargewicht von 500 bis 3000 und gegebenenfalls organische Säuren und/oder vom Weichmacher verschiedene organische Säureester enthält. Zitronensäureester sind dabei besonders bevorzugt.

In einer bevorzugten Ausführungsform enthält das Kunststoffmaterial gemäß der Erfindung 60 bis 85 Gew.-% der Celluloseester, 5 bis 20 Gew.-% der Weichmacher und 10 bis 20 Gew.%, insbesondere 10 bis 15 Gew.-% der Polyester.

Dieses Kunststoffmaterial wird erfindungsgemäß hergestellt, indem man die genannten Komponenten miteinander vermischt und im wesentlichen unter Vermeidung von Feuchtigkeitsaufnahme unmittelbar anschließend unter Erwärmen, vorzugsweise bei 160 bis 200 °C, extrudiert, wobei zum Extrudieren vorzugsweise ein Doppelschneckenextruder verwendet wird.

Die aus den erfindungsgemäßen Kunststoffmaterialien hergestellten Erzeugnisse erfüllten die obigen qualitativen Anforderungen und erwiesen sich als leicht biologisch abbaubar, so daß ihre Beseitigung keinerlei Probleme verursachte.

Die organischen Säuren und/oder von Weichmachern verschiedenen Säureester sind vorzugsweise Laurinsäure, Maleinsäure, Itaconsäure, Polymilchsäure oderen deren Ester. Besonders bevorzugt wird Itaconsäuredimethylester. Diese Verbindungen können dem Kunststoffmaterial in einer Menge bis zu 30 %, vorzugsweise bis zu 15 %, bezogen auf das Gewicht der restlichen Komponenten, zugesetzt werden.

Der in dem erfindungsgemäßen Kunststoffmaterial enthaltene Zitronensäureester ist zweckmäßig Acetyltriethylcitrat, welches einerseits wohlfeil ist, andererseits keinerlei Probleme in Bezug auf bilogische Abbaubarkeit zeigt.

Das solchermaßen gekennzeichnete Kunststoffmaterial kann in üblicher Weise, d. h. im Spritzgußverfahren, im Extrusionsverfahren und im Blasformverfahren, ohne Schwierigkeiten zu entsprechenden Kunststoffgegenständen ausgeformt werden.

Die Flammbeständigkeit kann durch Zugabe der üblichen flammhemmenden Mittel erreicht werden. Derartige flammhemmende Stoffe können in einer Menge von bis zu 20 %, bezogen auf das Gewicht der restlichen Komponenten, dem erfindungsgemäßen Kunststoffmaterial zugesetzt werden. Es hat sich als besonders vorteilhaft erwiesen, wenn das flammhemmende Mittel eine phosphororganische Verbindung ist, die bei dem biologischen Abbau keine Probleme verursacht.

Als besonders zweckmäßig haben sich Hydroxyethanphosphonsäuredimethylester und Triphenylphosphat erwiesen.

Überraschenderweise wurde bei den biologischen Abbauversuchen festgestellt, daß die Abbaugeschwindigkeit derartiger Kunststoffmaterialien durch Zusatz von Eisen- und/oder Manganverbindungen wesentlich beschleunigt werden kann. Zweckmäßig werden diese Eisen- und/oder Manganververbindungen in einer Menge bis zu 10, besonders bis zu 5 Gew.-% zugegeben. Sie können anorganischer oder organischer Natur sein. Zweiwertige Eisenverbindungen, besonders organische Eisenverbindungen sind bevorzugt. Als derartige organische Eisenverbindungen können beispielsweise Eisenacetat oder Ferrocene zugesetzt werden, d. h. Derivate von Bis-(cyclopentadienyl)-Eisen oder Eisen(II)-acetylacetonat.

Das erfindungsgemäße Kunststoffmaterial eignet sich besonders für die Herstellung von Kunststoffolien, aus denen die bekannten Tragetaschen hergestellt werden. Derartige in immensen Stückzahlen anfallenden Kunststoffprodukte lassen sich nach Gebrauch durch einfaches Kompostieren umweltschonend beseitigen. Andererseits sind die Festigkeitseigenschaften der mit dem erfindungsgemäßen Kunststoffmaterial gefertigten Folien ausreichend und erfüllen alle an sie gestellten Anforderungen.

Eine weitere besonders vorteilhafte Anwendung finden die erfindungsgemäßen biologisch abbaubaren Kunststoffmateralien für die Herstellung von Hüllen/Behältern für Öllichte, Ewiglichtölkerzen, Kompositionsöllichtern, anderer Grablichtausführungen und Opferlichten, die mit einem entsprechenden Brennmaterial, z. B. gemäß RAL, gefüllt auf Gräbern aufgestellt werden und nach dem Abbrennen des Brennmaterials üblicherweise auf dem Abfallhaufen landen. Die Beseitigung derartiger Hüllen/Behälter erweist sich bei den bisher gebräuchlichen, vorrangig aus PVC gefertigten Hüllen/Behältern als außerordentlich problematisch, weil diese Stoffe in der Regel nicht verrotten und beim Verbrennen außerordentlich umweltschädliche Reaktionsprodukte ergeben.

Die aus den erfindungsgemäßen Kunststoffmaterialien gefertigten Hüllen/Behälter für Öllichte, Ewiglichtölkerzen, Kompositionsöllichte, andere Grablichtausführungen, Opferlichte und Folien sind demgegenüber völlig unproblematisch und können durch einfaches Kompostieren beseitigt werden.

Die Herstellung der erfindungsgemäßen Kunststoffmaterialien erfolgt zweckmäßig in der Weise, daß die flüssigen Komponenten, wie der Weichmacher (z. B. Zitronensäureester) und der Polyester, miteinander gemischt werden und dann in einem Hochgeschwindigkeitsmischer dem festen pulvrigen Celluloseester beigemischt werden. Die solchermaßen erhaltene Zübereitung wird dann bei 160 bis 200 °C granuliert und gegebenenfalls pelletisiert und kann in dieser Form im Spritzgußverfahren oder Blasformverfahren zu dem jeweiligen Gegenstand ausgeformt werden. Die Granulierung erfolgt zweckmäßig mit Hilfe eines Extruders. Das Extrudat wird zerkleinert. Besonders vorteilhaft ist es, das Gemisch im wesentlichen unter Vermeidung einer Feuchtigkeitsaufnahme unmittelbar anschließend an das Vermischen zu extrudieren bzw. einem Extruder zuzuführen. Es soll also keine Zwischenlagerung erfolgen. Lagern und anschließendes Trocknen des Mischgutes erwiesen sich besonders für die Blasformung als nachteilig. Für das Extrudieren wird günstigerweise ein Doppelschneckenextruder verwendet.

Die sonstigen Zusätze, wie beipielsweise Flammschutzmittel und gegebenenfalls die organischen Eisen(II)-Verbindungen, werden ebenfalls im Hochgeschwindigkeitsmischer zugesetzt.

Anhang der nachfolgenden Beispiele wird die Erfindung im einzelnen näher erläutert.

### Beispiel 1

Durch Zusammenmischen von 10 Gewichtsteilen Polyester, 10 Gewichtsteilen Acetyltriethylcitrat, 10 Gewichtsteilen Triphenylphosphat und 70 Gewichtsteilen Celluloseacetobutyrat im Wirbelmischer (Typ Papenmeier) wurde eine innige Mischung hergestellt. Dieselbe wurde bei 170 °C granuliert und ebenfalls bei dieser Temperatur in einer Spritzgußmaschine vom Typ Arburg Allrounder-221 zu einer kleinen Becherform ausgeformt. Die Wandstärke betrug 1 mm.

Das erhaltene Formteil war transparent (die Lichtdurchlässigkeit betrug gegenüber PET g ca. 80 %). Das Formteil war weiterhin relativ weich, schwer entflammbar sowie beständig gegenüber heißem Öl (60 °C) und außerdem auch tieftemperaturbeständig bis -20 °C.

Die biologische Abbaubarkeit des erfindungsgemäßen Materials wurde qualitativ in einem labormäßigen Kompostierungsversuch untersucht. Die Dauer bis zum Materialzerfall und der Nichtauffindbarkeit der Teilchen beträgt zwischen einem Jahr und fünf Jahren. Eine Resistenz gegen biologischen Angriff ist für mindestens sechs Monate gegeben.

### Beispiel 2

Durch Zusammenmischen von 10 Gewichtsteilen Polyester, 15 Gewichtsteilen Acetyltriethylcitrat, 15 Gewichtsteilen Hydroxyethanphosphonsäuredimethylester und 60 Gewichtsteilen Celluloseacetat im Wirbelmischer (Typ Papenmeier) wurde eine innige Mischung hergestellt. Dieselbe wurde bei 200 °C granuliert, und das Granulat wurde in einer Extrusionsblasformmaschine (Typ Dekum BAE 1) bei 180 °C (Blasdruck 4,25 bar) zu kleinen Flaschen ausgeformt.

Die solchermaßen hergestellten Flaschen waren in gleicher Weise wie die in Beispiel 1 erhaltenen Becher transparent. Das Material war indessen fester, die Temperaturstabilität noch besser und die Flammfestigkeit hervorragend. In der Flamme schmolz und zersetzte sich das Material nur mit geringer Rauchentwicklung. Alle weiteren thermischen, mechanischen und biologischen Eigenschaften entsprachen in etwa dem Produkt nach Beispiel 1. Die Wandstärke der Flaschen betrug etwa 0,5 mm.

### Beispiel 3

Durch Zusammenmischen von 10 Gewichtsteilen Polyester, 20 Gewichtsteilen Acetyltriethylcitrat, 10 Gewichtsteilen Itaconsäuredimethylester und 60 Gewichtsteilen Celluloseacetat wurde eine innige Mischung hergestellt und das so erhaltene Material unter Druck zu einer Preßfolie verarbeitet (5 t auf eine Fläche von 100 cm³, Temperatur 200 °C). Die erhaltene Folie war transparent, fest und stabil und erfüllte die an sie gestellten Anforderungen.

### Beispiel 4

Durch Zusammenmischen von 10 Gewichtsteilen Polyester, 13 Gewichtsteilen Zitronensäureester, 2 Gewichtsteilen Eisen(II)-acetylacetonat und 75 Gewichtsteilen Celluloseacetat wurde eine innige Mischung hergestellt und wie in Beispiel 3 zu einer Folie ausgeformt. Die Folie war transparent und leicht rötlich-gelb gefärbt. Ansonsten entsprachen die Eigenschaften der Folie nach Beispiel 3.

### Beispiel 5

60 Gewichtsteile Celluloseacetat, 30 Gewichtsteile Acetyltriethylcitrat und 10 Gewichtsteile linearer, aliphatischer Polyester wurden im Kugelhochgeschwindigkeitsmischer gemischt und anschließend extrudiert und granuliert. Das Material wurde wie in Beispiel 2 auf einer Blasformmaschine verarbeitet. Hergestellt wurden Öllichtbehälter mit einem Einsatzgewicht von 20 g. Die Hüllen zeigten hervorragende Transparenz und Homogenität. Die Hüllenwurden mit Brennmasse gefüllt und mit Docht und Halter versehen. Das Material hielt der Temperatur der geschmolzenen Brennmasse stand (ca. 60 °C). Die Kerze brannte einwandfrei ab, die Hülle blieb dabei vollständig in ihrer Form erhalten.

Die aus den erfindungsgemäßen Kunststoffmaterialien hergestellten Erzeugnisse erwiesen sich als leicht biologisch abbaubar, so daß ihre Beseitigung keinerlei Probleme verursachte.

## Patentansprüche

1. Biologisch abbaubares, ausformbares Kunststoffmaterial, enthaltend 50 bis 90 Gew.-% Celluloseester in Form von Celluloseacetat und/oder Celluloseacetobutyrat, 5 bis 40 Gew.-% wenigstens eines biologisch abbaubaren Carbonsäureesters aus der Gruppe der Zitronensäure-, Weinsäure- und Bernsteinsäureester als Weichmacher sowie 5 bis 30 Gew.-% wenigstens eines linearen, hydroxylgruppenhaltigen Polyesters mit einem Molekulargewicht von 500 bis 3000 und gegebenenfalls organische Säuren und/oder vom Weichmacher verschiedene organische Säureester.

2. Kunststoffmaterial nach Anspruch 1,
dadurch gekennzeichnet,
daß es aus 60 bis 85 Gew.-% der Celluloseester, 5 bis 20 Gew.-% der Weichmacher und 10 bis 20 Gew.-% der Polyester besteht.

3. Kunststoffmaterial nach Anspruch 2,
dadurch gekennzeichnet,
daß er 10 bis 15 Gew.-% der Polyester enthält.

4. Kunststoffmaterial nach einem der Ansprüche 1 bis 3, **dadurch gekennzeichnet**, daß es als die organischen Säuren und/oder von Weichmacher verschiedenen Säureester Laurinsäure Maleinsäure, Itaconsäure, Polymilchsäure oder deren Ester, insbesondere Itaconsäuredimethylester enthält.

5. Kunststoffmaterial nach einem oder mehreren der Ansprüche 1 bis 4, **dadurch gekennzeichnet**, daß die organischen Säuren und/oder vom Weichmacher verschiedenen Säureester in einer Menge von bis zu 15 Gew.-%, bezogen auf das Gewicht der restlichen Komponenten, enthalten sind.

6. Kunststoffmaterial nach einem oder mehreren der Ansprüche 1 bis 5, **dadurch gekennzeicnet**, daß es als Zitronensäureester Acetyltriethylcitrat enthält.

7. Kunststoffmaterial nach einem oder mehreren der Ansprüche 1 bis 6, **dadurch gekennzeichnet**, daß es einen flammhemmenden Zusatz in einer Menge von bis zu 20 Gew.-%, bezogen auf das Gewicht der restlichen Komponenten, aufweist.

8. Kunststoffmaterial nach Anspruch 7, **dadurch gekennzeichnet**, daß es als flammhemmendes Mittel eine phosphororganische Verbindung enthält.

9. Kunststoffmaterial nach Anspruch 8, **dadurch gekennzeichnet**, daß es als flammhemmendes Mittel Hydroxyethanphosphonsäuredimethylesteer enthält.

10. Kunststoffmaterial nach einem oder mehreren der Ansprüche 1 bis 9, **dadurch gekennzeichnet**, daß es wenigstens eine Eisen- und/oder Manganverbindung enthält.

11. Kunststoffmaterial nach Anspruch 9 , **dadurch gekennzeichnet**, daß es bis zu 5 Gew.% der Eisen- und/oder Manganverbindung enthält.

12. Kunststoffmaterial nach Anspruch 9 oder 10, **dadurch gekennzeichnet**, daß es wenigstens eine organische Eisen(II)-Verbindung enthält.

13. Verfahren zur Herstellung eines Kunststoffmaterials nach einem der Ansprüche 1 bis 11, **dadurch gekennzeichnet**, daß man 50 bis 90 Gew.-% Celluloseester in Form von Celluloseacetat und/oder Celluloseacetobutyrat, 5 bis 40 Gew.-% wenigstens eines biologisch abbaubaren Carbonsäureesters aus der Gruppe der Zitronensäure-, Weinsäure- und Bernsteinsäureester als Weichmacher sowie 5 bis 30 Gew.-% wenigstens eines linearen, hydroxylgruppenhaltigen Polyesters mit einem Molekulargewicht von 500 bis 3000 und gegebenenfalls organische Säuren und/oder vom Weichmacher verschiedene organische Säureester miteinander vermischt und unter Vermeidung einer Feuchtigkeitsaufnahme unmittelbar anschließend unter Erwärmen extrudiert.

14. Verfahren nach Anspruch 13, **dadurch gekennzeichnet**, daß man zum Extrudieren einen Doppelschneckenextruder verwendet.

15. Verfahren nach Anspruch 13 oder 14, **dadurch gekennzeichnet**, daß man bei 160 bis 200 °C extrudiert.

16. Verwendung des Kunststoffmaterials nach einem oder mehreren der Ansprüche 1 bis 12 zur Herstellung von Kunststoffolien.

17. Verwendung des Kunststoffmaterials nach einem oder mehreren der Ansprüche 1 bis 12 zur Herstellung von Gegenständen im Spritzgußverfahren, Extrusionsverfahren oder Blasformverfahren.

18. Verwendung des Kunststoffmaterials nach einem oder mehreren der Ansprüche 1 bis 12 zur Herstellung von Hüllen/Behältern für Öllichte, Ewiglichtölkerzen, Kompositionsöllichte, anderer Grablichtausführungen, Opferlichten und Folien.

19. Hüllen/Behälter für Öllichte, Ewiglichtölkerzen, Kompositionsöllichte, andere Grablichtausführungen, Opferlichte und Folien, **dadurch gekennzeichnet**, daß sie aus einem Kunststoffmaterial nach einem oder mehreren der Ansprüche 1 bis 12 gefertigt sind.

20. Hüllen/Behälter für Öllichte, Ewiglichtölkerzen, Kompositionsöllichte, andere Grablichtausführungen, Opferlichte und Folien nach Anspruch 19, **dadurch gekennzeichnet**, daß sie im Blasform- oder Spritzgußverfahren gefertigt sind.

## Claims

1. Biodegradable, moldable plastic material, comprising from 50 to 90 weight percent of cellulose ester in form of cellulose acetate and/or cellulose acetobutyrate, from 5 to 40 weight percent of at least one biodegradable carboxylic acid ester from the group of citric acid ester, tartaric acid ester and succinic acid ester as plasticizer as well as 5 to 30 weight percent of at least one linear hydroxyl groups containing polyester with a molecular weight from 500 to 3000 and possibly organic acids and/or organic acid esters different from said plasticizer.

2. A plastic material according to claim 1,
**characterized in**
that it consists of 60 to 85 weight percent of said cellulose esters, 5 to 20 weight percent of said plasticizer and 10 to 20 weight percent of said polyesters.

3. A plastic material according to claim 2,
**characterized in**
that it contains 10 to 15 weight percent of said polyesters.

4. A plastic material according to one of claims 1 to 3,
**characterized in**
that it contains as said organic acids and/or acid esters different from the platicizer lauric acid, maleic acid, itaconic acid, polylactic acid or their esters, particularly itaconic acid dimethyl ester.

5. A plastic material according to one or a plurality of claims 1 to 4,
**characterized in**
that it contains the organic acids and/or the acid esters different from the plasticizer in a quantitiy of up to 15 weight percent with respect to the weight of the remaining components.

6. A plastic material according to one or a plurality of claims 1 to 5,
**characterized in**
that it contains acetyl triethyl citrate as the citric acid ester.

7. A plastic material according to one or a plurality of claims 1 to 6,
**characterized in**
that it includes a flame inhibiting additive in a quantity of up to 20 weight percent with respect to the weight of the remaining components.

8. A plastic masterial according to claim 7,
**characterized in**
that it contains an organophosphorus compound as the flame inhibiting substance.

9. A plastic material according to claim 8,
**characterized in**
that it contains hydroxethane phosphonic acid dimethyl ester as the flame inhibiting substance.

10. A plastic material according to one or a plurality of claims 1 to 9,
**characterized in**
that it contains at least one iron and/or manganese compound.

11. A plastic material according to claim 9,
**characterized in**
that it contains up to 5 weight percent of the iron and/or manganese compound.

12. A plastic material according to claim 9 or 10,
**characterized in**
that it contains at least one organic iron (II) compound.

13. A method of producing a plastic material according to one of claims 1 to 11,
**characterized in**
that 50 to 90 weight percent cellulose ester in form of cellulose acetate and/or cellulose acetobutyrate, 5 to 40 weight percent of at least one biodegradable carboxylic acid ester from the group of citric acid ester, tartanic acid ester and succinic acid ester as plasticizer as well as 5 to 30 weight percent of at least one linear hydroxyl group containing polyester with a molecular weight from 500 to 3000, and possibly organic acids and/or organic acid esters different from the plasticizer are mixed with one another and extruded immediately thereafter while being heated and avoiding the absorption of moisture.

14. A method according to claim 13,
**characterized in**
that a double screw extruder is employed for the extrusion.

15. A method according to claim 13 or 14,
**characterized in**
that the extrusion takes places at 160° to 200°C.

16. Use of a plastic material according to one or a plurality of claims 1 to 12 for the production of thin plastic sheets.

17. Use of the plastic material according to one or a plurality of claims 1 to 12 for the production of articles produced by injection molding, extrusion or blow molding.

18. Use of the plastic material according to one or a plurality of claims 1 to 12 for the production of enclosures/containers for oil lamps, eternal flame oil candles, composition oil lamps and other cemeterey light designs, votive lights and thin sheets.

19. Enclosures/containers for oil lamps, eternal oil candles, composition oil lamps, other cemetery light designs, votive lights and thin sheets,
**characterized in**
that they are manufactured from a plastic material according to one or a plurality of claims 1 to 12.

20. Enclosures/containers for oil lamps, eternal flame oil candles, composition oil lamps, other cemetery light designs, votive lights and thin sheets according to claim 19,
**characterized in**
that they are manufactured by blow molding, injection molding or the like.

## Revendications

1. Matière plastique biodégradable, moulable, contenant 50 à 90 % en poids d'esters cellulosiques sous la forme d'acétate de cellulose et/ou d'acétobutyrate de cellulose, 5 à 40 % en poids d'au moins un ester d'acide carboxylique biodégradable du groupe des esters de l'acide citrique, de l'acide tartrique et de l'acide succinique comme plastifiant ainsi que 5 à 30 % en poids d'au moins un polyester linéaire, contenant des groupes hydroxyles, ayant une masse moléculaire de 500 à 3 000 et le cas échéant des acides organiques et/ou différents du plastifiant esters d'acides organiques.

2. Matière plastique selon la revendication 1, caractérisée en ce qu'elle se compose de 60 à 85 % en poids des esters cellulosiques, de 5 à 20 % en poids des plastifiants et 10 à 20 % en poids des polyesters.

3. Matière plastique selon la revendication 2, caractérisée en ce qu'elle contient 10 à 15 % en poids des polyesters.

4. Matière plastique selon l'une des revendications 1 à 3, caractérisée en ce qu'elle contient comme acides organiques et/ou comme esters différents des plastifiants, de l'acide laurique, de l'acide maléique, de l'acide itaconique, de l'acide polylactique ou leurs esters, en particulier l'ester diméthylique de l'acide itaconique.

5. Matière plastique selon une ou plusieurs des revendications 1 à 4, caractérisée en ce que les acides organiques et/ou les esters différents du plastifiant sont contenus dans une proportion allant jusqu'à 15 % en poids, par rapport au poids des autres constituants.

6. Matière plastique selon une ou plusieurs des revendications 1 à 5, caractérisée en ce qu'elle contient comme ester de l'acide citrique du citrate d'acétyltriéthyle.

7. Matière plastique selon une ou plusieurs des revendications 1 à 6, caractérisée en ce qu'elle présente un additif ignifugeant dans une proportion allant jusqu'à 20 % en poids par rapport au poids des autres constituants.

8. Matière plastique selon la revendication 7, caractérisée en ce qu'elle contient comme agent ignifugeant un composé organique du phosphore.

9. Matière plastique selon la revendication 8, caractérisée en ce qu'elle contient comme agent ignifugeant de l'ester diméthylique de l'acide hydroxyéthanephosphonique.

10. Matière plastique selon une ou plusieurs des revendications 1 à 9, caractérisée en ce qu'elle contient au moins un composé du fer et/ou du manganèse.

11. Matière plastique selon la revendication 9, caractérisée en ce qu'elle contient jusqu'à 5 % en poids du composé du fer et/ou du manganèse.

12. Matière plastique selon les revendications 9 ou 10, caractérisée en ce qu'elle contient au moins un composé organique du fer (II).

13. Procédé de fabrication d'une matière plastique selon l'une des revendications 1 à 11, caractérisé en ce qu'on mélange 50 à 90 % d'esters cellulosiques sous la forme d'acétate de cellulose et/ou d'acétobutyrate de cellulose, 5 à 40 % en poids d'au moins un ester d'acide carboxylique biodégradable choisi parmi les esters de l'acide citrique, de l'acide tartrique et de l'acide succinique comme plastifiant ainsi que 5 à 30 % en poids d'au moins un polyester linéaire, contenant des groupes hydroxyle, ayant une masse moléculaire de 500 à 3 000 et le cas échéant des acides organiques et/ou des esters d'acides organiques différents du plastifiant, et en ce qu'on les extrude aussitôt après en les chauffant en évitant une fixation d'humidité.

14. Procédé selon la revendication 13, caractérisé en ce qu'on utilise pour l'extrusion une extrudeuse bivis.

15. Procédé selon les revendications 13 ou 14, caractérisé en ce qu'on effectue l'extrusion entre 160 et 200°C.

16. Utilisation de la matière plastique selon une ou plusieurs des revendications 1 à 12 pour la fabrication de feuilles de matière plastique.

17. Utilisation de la matière plastique selon une ou plusieurs des revendications 1 à 12 pour la fabrication d'objets par un procédé d'injection, un procédé d'extrusion ou un procédé d'extrusion-soufflage.

18. Utilisation de la matière plastique selon une ou plusieurs des revendications 1 à 12 pour la fabrication d'enveloppes/récipients pour des lampes à huile, des cierges du Saint-Sacrement, des lampes à huile de composition, d'autres modèles de lampes funèbres, des lampes pour offrandes et de feuilles.

19. Enveloppes/récipients pour lampes à huile, cierges du Saint-Sacrement, lampes à huile de composition, autres modèles de lampes funèbres, lampes pour offrandes et feuilles, caractérisés en ce qu'ils sont fabriqués à partir d'une matière plastique selon une ou plusieurs des revendications 1 à 12.

20. Enveloppes/récipients pour lampes à huile, cierges du Saint-Sacrement, lampes à huile de composition, autres modèles de lampes funèbres, lampes pour offrandes et feuilles selon la revendication 19, caractérisés en ce qu'ils sont fabriqués par un procédé d'extrusion-soufflage ou d'injection.
